# EUROPEAN PATENT APPLICATION

(11) **EP 4 456 206 A1**
(43) Date of publication of application: **30.10.2024**
(21) Application number: 24160127.7
(22) Date of filing: 28.02.2024
(51) Int. Cl.: H01M 4/92, H01M 8/1018, H01M 4/02, H01M 8/10

(54) **ELECTRODE CATALYST FOR FUEL CELL AND SOLID POLYMER FUEL CELL INCLUDING THE SAME**

(30) Priority: 09.03.2023 JP 2023036704
(71) Applicant: TOYOTA JIDOSHA KABUSHIKI KAISHA, Toyota-shi, Aichi-ken, 471-8571 (JP); CATALER CORPORATION, Kakegawa-shi, Shizuoka 437-1492 (JP)
(72) Inventor: SHIMIZU, Ryo, Aichi-ken, 471-8571 (JP); HORI, Akihiro, Shizuoka, 437-1492 (JP); MATSUMURA, Yuko, Shizuoka, 437-1492 (JP); YONEUCHI, Tsubasa, Shizuoka, 437-1492 (JP); SATO, Hitohiko, Shizuoka, 437-1492 (JP)
(74) Representative: Kuhnen & Wacker Patent- und Rechtsanwaltsbüro PartG mbB

(57) **Abstract**

Provided is an electrode catalyst for a fuel cell having a high activation and a high durability at the same time. The present disclosure relates to an electrode catalyst for a fuel cell including a carbon carrier and catalyst metal particles supported on the carbon carrier. The catalyst metal particles are formed of Pt or a Pt alloy. In the electrode catalyst, a BET specific surface area, a micropore area, and an R-value (= D/G) of the carbon carrier are specified. The R-value (= D/G) is an intensity ratio of a peak near 1340 cm⁻¹ (D-band) to a peak near 1580 cm⁻¹ (G-band) in a Raman spectroscopy analysis.

## Description

### BACKGROUND

### Technical Field

The present disclosure relates to an electrode catalyst for a fuel cell and a solid polymer fuel cell including the same.

### Description of Related Art

A solid polymer fuel cell, which is a fuel cell that generates electricity using an electrochemical reaction between a fuel gas and an oxidant gas, has attracted attention as an energy source. Since the solid polymer fuel cell allows operation at room temperature while its output density is high, the solid polymer fuel cell has been actively studied as a configuration appropriate for automobile application and the like.

The solid polymer fuel cell generally uses a membrane electrode assembly ("fuel electrode-solid polymer electrolyte membrane-air electrode") (hereinafter also referred to as "MEA"). The membrane electrode assembly includes a solid polymer electrolyte membrane as an electrolyte membrane, and respective electrodes (a fuel electrode (anode catalyst layer) and an air electrode (cathode catalyst layer)), which are formed of catalyst layers, and are assembled to both surfaces of the solid polymer electrolyte membrane. Gas diffusion layers are further assembled to both surfaces of the MEA in some cases, and this is referred to as a membrane electrode gas diffusion layer assembly ("gas diffusion layer-MEA-gas diffusion layer") (hereinafter also referred to as "MEGA").

The electrodes are each formed of a catalyst layer, and the catalyst layer is a layer that causes an electrode reaction by an electrode catalyst included in the catalyst layer. Since a three-phase interface in which three phases of an electrolyte, an electrode catalyst, and a reaction gas coexist is necessary for the progress of the electrode reaction, the catalyst layer is generally formed of the layer that includes the electrode catalyst and the electrolyte. The gas diffusion layer is a layer to supply the reaction gas to the catalyst layer and to give and receive electrons, and a porous material having electron conductivity is used for the gas diffusion layer.

As an electrode catalyst used for the solid polymer fuel cell, for example, JP 2014-534052 A discloses a catalyst that includes (i) a primary metal or alloy or mixture including the primary metal, and (ii) an electrically conductive carbon support material for the primary metal or alloy or mixture including the primary metal, wherein the carbon support material (a) has a specific surface area (BET) of 100-600 m²/g, and (b) has a micropore area of 10-90 m2/g.

WO 2013/129417 A1 discloses a cathode electrode for a fuel cell that includes a conductive carrier having pores and a catalyst having a platinum alloy supported in the pores of the conductive carrier, wherein the catalyst has a peak value of more than 1 cm³/g in a pore diameter range of 2 to 6 nm when diameters of the pores is plotted in relation with volumes of the pores and also a BET specific surface area of 1300 m²/g. In the cathode electrode for a fuel cell, the conductive carrier has an R-value (= D/G) of more than 0.7 and less than 1.8, where the R-value (= D/G) is an intensity ratio of a peak near 1340 cm⁻¹ (D-band) to a peak near 1580 cm⁻¹ (G-band) as measured by a Raman spectrometric method.

### SUMMARY

For achieving a fuel cell electric vehicle (FCEV) for a commercial vehicle expected to be driven a long distance, an electrode catalyst having high durability is desired. Additionally, from the aspect of load capacity range, size reduction, and further, improved performance (higher activation) of a stack are also desired at the same time. However, the performance and the durability are contradicted each other, and it has been difficult to provide both at the same time.

Accordingly, the present disclosure provides an electrode catalyst for a fuel cell providing high activation and high durability at the same time.

The durability and the performance of an electrode catalyst are correlated with a specific surface area of a carbon carrier. For improving the durability, it is necessary to reduce the specific surface area of the carbon carrier, and meanwhile, for improving the performance, it is necessary to increase the specific surface area. That is, they are in the relation of trade-off, it is difficult to provide both of the high performance and the high durability at the same time. Accordingly, conventionally, a physical property range that maintains the performance while suppressing the specific surface area of the carbon carrier that affects the durability has been presented.

The inventors examined various means to solve the problem, and found that by using a carbon carrier that is treated by the high temperature graphitization and has a high micropore area and a high specific surface area as carrier particles that support catalyst metal particles in an electrode catalyst for a fuel cell, the obtained electrode catalyst for a fuel cell has the high activation and the high durability at the same time. Thus, the inventors achieved the present disclosure.

That is, the gist of the present disclosure is as follows.
(1) An electrode catalyst for a fuel cell, comprising:
   a carbon carrier; and
   catalyst metal particles supported on the carbon carrier, the catalyst metal particle being formed of platinum (Pt) or a Pt alloy,
   wherein the carbon carrier has:
      (i) a BET specific surface area of 600 m²/g to 740 m²/g;
      (ii) a micropore area of 15 m²/g to 40 m²/g; and
      (iii) an R-value (= D/G) of 1.8 or less, and the R-value (= D/G) is an intensity ratio of a peak near 1340 cm⁻¹ (D-band) to a peak near 1580 cm⁻¹ (G-band) in a Raman spectroscopy analysis.
(2) A solid polymer fuel cell comprising
   a membrane electrode assembly that includes an anode catalyst layer, a cathode catalyst layer, and a solid polymer electrolyte membrane disposed between the anode catalyst layer and the cathode catalyst layer,
   wherein an electrode catalyst of the anode catalyst layer and/or the cathode catalyst layer is the electrode catalyst for a fuel cell according to (1).

The present disclosure provides the electrode catalyst for a fuel cell having the high activation and the high durability at the same time.

### BRIEF DESCRIPTION OF THE DRAWINGS

FIG. 1 is a graph illustrating a relation between a specific surface area (SSA) and a micropore area of carbon carriers used in Comparative Examples and Examples;
FIG. 2 is a graph illustrating a relation between current densities and cell voltages in unit cells of Comparative Examples 1, 6, and 10, and Example 1; and
FIG. 3 is a graph illustrating a relation between current densities and cell voltages in unit cells of Comparative Examples 1, 4, 6, and 9 to 12, and Example 1.

### DETAILED DESCRIPTION OF THE EMBODIMENTS

The following describes embodiments of the present disclosure in detail.

An electrode catalyst for a fuel cell and a solid polymer fuel cell including the same of the present disclosure are not limited to the embodiments below, and can be performed in various configurations where changes, improvements, and the like which a person skilled in the art can make are given without departing from the gist of the present disclosure.

The present disclosure relates to an electrode catalyst for a fuel cell including a carbon carrier and catalyst metal particles supported on the carbon carrier. The catalyst metal particles are formed of Pt or a Pt alloy. In the electrode catalyst, a BET specific surface area, a micropore area, and an R-value (= D/G) of the carbon carrier are specified. The R-value (= D/G) is an intensity ratio of a peak near 1340 cm⁻¹ (D-band) to a peak near 1580 cm⁻¹ (G-band) in a Raman spectroscopy analysis.

Here, the catalyst metal particles are not limited insofar as the catalyst metal particles contain platinum and/or a platinum alloy, and exhibit a catalytic action in the following reactions at electrodes of a membrane electrode assembly.
air electrode (cathode catalyst layer): O₂+4H⁺+4e⁻ → 2H₂O
hydrogen electrode (anode catalyst layer): 2H₂ → 4H⁺+4e⁻
The catalyst metal particles publicly known in the technical field can be used.

The platinum alloy, while not limited, may be, for example, an alloy of platinum and one or two or more selected from the group consisting of cobalt, nickel, iron, manganese, copper, titanium, tungsten, tin, gallium, zirconium, chromium, gadolinium, terbium, ytterbium, hafnium, and osmium.

Among them, platinum, a platinum-cobalt alloy, a platinum-nickel alloy, and the like may be used, and especially, a platinum-cobalt alloy may be used.

The catalyst metal particles may be metal particles having a granular shape. The catalyst metal particle may have a particle diameter of ordinarily 1 nm to 10 nm, although not limited. The particle diameter of the catalyst metal particle can be measured with TEM, XRD, 3D-TEM, or the like.

A platinum alloy as the catalyst metal particles can be prepared, for example, based on WO 2016/063968 A1.

For example, a method for producing catalyst metal particles is as follows. The method for producing catalyst metal particles includes (1) supporting platinum or platinum and a metal M other than platinum on a carbon carrier, and as necessary, may include (2) alloying the platinum and the metal M other than platinum (for example, cobalt) supported on the carbon carrier, and (3) performing an acid treatment of the platinum or the platinum alloy supported on the carbon carrier. Examples of the metal M other than platinum include one or two or more metals selected from the group consisting of cobalt, nickel, iron, manganese, copper, titanium, tungsten, tin, gallium, zirconium, chromium, gadolinium, terbium, ytterbium, hafnium, and osnium. In the step of (1) supporting, platinum or platinum and the metal M other than platinum are supported on the carbon carrier, for example, with a mole ratio of platinum:M = 3:1 to 7:1. Since a part of the metal M other than platinum is removed in the step of performing the acid treatment described later, in the supporting step, the metal M other than platinum is supported more compared with a predetermined mole ratio between platinum and the metal M other than platinum in a catalyst as a completed product. Use of the catalyst produced with such a mole ratio allows further improving an initial performance in power generation of a fuel cell and a durability of a fuel cell. In the step of (2) alloying, the platinum and the metal M other than platinum are alloyed at 700°C to 900°C or 750°C to 850°C. Use of the catalyst produced with such an alloying temperature allows further improving an initial performance in power generation of a fuel cell and a durability of a fuel cell. In the step of (3) performing the acid treatment, the platinum or the platinum alloy supported on the carbon carrier is acid-treated at, for example, 70°C to 90°C or 75°C to 85°C. The acid treatment at such a temperature allows sufficiently removing the metal M other than platinum that does not contribute to the reaction. This allows suppressing dissolution of the metal M other than platinum. Examples of acid used in the step of performing the acid treatment can include inorganic acids (nitric acid, phosphoric acid, permanganic acid, sulfuric acid, hydrochloric acid, and the like) and organic acids (acetic acid, malonic acid, oxalic acid, formic acid, citric acid, lactic acid, and the like).

A content of the catalyst metal particles is, although not limited, ordinarily from 5 weight% (% by weight) to 70 weight%, and from 10 weight% to 60 weight% in some embodiments relative to the total weight of the electrode catalyst for a fuel cell.

The carbon carrier can be produced by performing a graphitization treatment at high temperature on carbon carrier raw material particles, which are publicly known in the technical field, as described later in detail, and is not limited. Examples of the carbon carrier raw material particles include carbon black, carbon nanotube, carbon nanofiber, mesoporous carbon (for example, see JP 2021-84852 A), or a mixture of two or more thereof.

A BET specific surface area of the carbon carrier is from 600 m²/g to 740 m²/g, and may be from 650 m²/g to 740 m²/g.

Here, the BET specific surface area is a specific surface area obtained according to BET method, and publicly known to those skilled in the art. The unit of BET specific surface area is an area per gram of carbon carrier (m²/g).

The carbon carrier having the high BET specific surface area enables improvement of the performance of a fuel cell.

A micropore area of the carbon carrier is from 15 m²/g to 40 m²/g, from 25 m²/g to 40 m²/g in some embodiments, and may be from 30 m²/g to 40 m²/g.

Here, the micropore area is a surface area relating to micropores. The micropore is defined as a pore having an inner width of less than 2 nm. The micropore area is determined by using a ***t***-plot generated from a nitrogen adsorption isotherm in the BET method or the like. The ***t***-plot has a volume of an adsorbed gas plotted as a function of a standard multilayer thickness ***t***, and a value ***t*** is calculated using a pressure value from an adsorption isotherm in a formula of thickness, in this case, Harkins-Jura equation. Use of a gradient of a linear part of the ***t***-plot in a thickness value between from 0.35 nm to 0.5 nm, an outer surface area, that is, a surface area relating to all pores excluding micropores is calculated. Subsequently, the outer surface area is subtracted from the BET surface area, thereby calculating the micropore area. The unit of the micropore area is an area per gram of the carbon carrier (m²/g).

Suppressing the micropore area of the carbon carrier to be low allows ensuring the durability of the carbon carrier together with high crystallization caused by a low R-value in Raman spectroscopy analysis described below.

An R-value (= D/G), which is an intensity ratio of a peak near 1340 cm⁻¹ (D-band) to a peak near 1580 cm⁻¹ (G-band) (=D/G) in Raman spectroscopy analysis of the carbon carrier particle (in this description and the like, simply referred to as an "R-value" in other words), is 1.8 or less, and from 0.8 to 1.8 in some embodiments.

Here, the R-value in the Raman spectroscopy analysis can be obtained as follows. In a Raman spectroscopy measurement using a laser beam having a wavelength of 532 nm as an excitation light, a circular beam having a diameter of 1 µm is irradiated on a sample, a D-band near 1352 cm⁻¹, a G-band near 1580 cm⁻¹, and a D'-band near 1620 cm⁻¹ are each separated using a Voigt function for any 50 measurement points on the same sample, and peak intensities of the D-band and the G-band are analyzed and calculated, thus obtaining the R-value.

Lowering the R-value in the Raman spectroscopy analysis of the carbon carrier achieves the high crystallization, and allows ensuring the durability of the carbon carrier.

Accordingly, in the electrode catalyst for a fuel cell of the present disclosure, the catalyst metal particles are supported on the carbon carrier having the BET specific surface area, the micropore area, and the R-value in the Raman spectroscopy analysis in the above-described ranges. As the result, the high specific surface area ensures a reaction field in a fuel cell and improves the performance, and the suppressed micropore area and the high crystallization improve resistance to the corrosion of carbon, which is a cause of deterioration of the carbon carrier, and improve the durability as well.

The carbon carrier can be prepared by performing a graphitization treatment at high temperature described below on the carbon carrier raw material particles to adjust the BET specific surface area, the micropore area, and the R-value as described above.

The graphitization treatment at high temperature means performing a heat treatment on the carbon carrier raw material particles at a temperature higher than 1500°C. Since the excessively low heat treatment temperature causes insufficient graphitization, the heat treatment temperature is more than 1500°C in some embodiments. Furthermore, the heat treatment temperature is 1700°C or more in some embodiments, and may be 1800°C or more. On the other hand, the heat treatment temperature that is high more than necessary provides no difference in effect, and there is no practical benefit. Accordingly, the heat treatment temperature is 2300°C or less in some embodiments, and may be 2200°C or less.

The electrode catalyst for a fuel cell of the present disclosure can be used as an electrode catalyst for a cathode catalyst layer and/or for an anode catalyst layer in a fuel cell. The electrode catalyst for a fuel cell of the present disclosure is used as an electrode catalyst for a cathode catalyst layer in a fuel cell in some embodiments. Use of the electrode catalyst for a fuel cell of the present disclosure as an electrode catalyst for a cathode catalyst layer allows suppressing dissolution of a noble metal, especially a noble metal in the cathode catalyst layer in which platinum and/or a platinum alloy possibly dissolve, thereby allowing the improvement of the durability of the fuel cell.

The electrode catalyst for a fuel cell of the present disclosure can be produced by a publicly known method except that the carbon carrier having the BET specific surface area, the micropore area, and the R-value in the Raman spectroscopy analysis as described above is used as a carbon carrier.

The electrode catalyst for a fuel cell of the present disclosure can be prepared, for example, as follows.
(1) Carbon carrier particles having specific BET specific surface area, micropore area, and R-value in a Raman spectroscopy analysis and a platinum precursor, for example, dinitrodiamine platinum nitric acid solution are suspended in a solvent, for example, pure water, thus obtaining a suspension.
(2) The platinum precursor in the suspension obtained in (1) is reduced to a noble metal at ordinary room temperature (about 20°C) to 100°C with a reductant, for example, ethanol or sodium borohydride, thus obtaining a dispersion liquid.
(3) The dispersion liquid obtained in (2) is filtered, and an obtained filter cake is dried at ordinarily 80°C to 120°C for ordinarily one hour to 12 hours, thus obtaining a powder.
(4) The powder obtained in (3) is fired under an inert atmosphere, for example, under a nitrogen or argon atmosphere, at ordinarily 100°C to 1200°C for ordinarily one hour to eight hours, thus obtaining particles supporting catalyst metal particles.

The firing of (4) is performed for improving the durability in the use of the electrode catalyst for a fuel cell at a high temperature. The firing is performed within a range in which the pore diameter and/or the pore capacity of the carrier particle is not changed.

When the particles supporting the catalyst metal particles obtained in (4) contains impurities, such as a metal added in (2), the particles supporting the catalyst metal particles obtained in (4) is added in a solution containing an acid, a base, or the like, thereby allowing dissolving and removing the impurities.

Furthermore, when a platinum alloy is obtained from the noble metal in the electrode catalyst for a fuel cell, as described above, a solution containing a metal contained in the alloy, for example, cobalt in an ionic form is added to the particles supporting the catalyst metal particles, fired (alloyed) to alloy platinum to platinum cobalt, and an acid treatment is performed at last.

The present disclosure relates to also a fuel cell including the electrode catalyst for a fuel cell of the present disclosure, that is, a solid polymer fuel cell including a membrane electrode assembly, which includes an anode catalyst layer, a cathode catalyst layer, and a solid polymer electrolyte membrane disposed between the anode catalyst layer and the cathode catalyst layer. In the solid polymer fuel cell, an electrode catalyst of the anode catalyst layer and/or the cathode catalyst layer is the electrode catalyst for a fuel cell of the present disclosure.

Here, the solid polymer electrolyte membrane is an electrolyte membrane having proton conductivity in some embodiments. As the electrolyte membrane having proton conductivity, an electrolyte membrane having proton conductivity known in the technical field can be used. While not limited, for example, a membrane formed of a fluororesin having a sulfonic acid group as an electrolyte (Nafion (produced by DuPont), FLEMION (produced by AGC Inc.), Aciplex (produced by Asahi Kasei Corporation), and the like) can be used.

While not limited, a thickness of the solid polymer electrolyte membrane is ordinarily 5 µm to 50 µm to improve the function of the proton conductivity.

The anode catalyst layer serves as a fuel electrode, namely a hydrogen electrode, and the cathode catalyst layer serves as an air electrode (oxygen electrode). The catalyst layers each include an electrode catalyst and an electrolyte.

The anode catalyst layer and/or the cathode catalyst layer includes the electrode catalyst for a fuel cell of the present disclosure as an electrode catalyst, and the electrode catalyst for a fuel cell of the present disclosure is as described above.

When the anode catalyst layer or the cathode catalyst layer does not include the electrode catalyst for a fuel cell of the present disclosure as an electrode catalyst, an electrode catalyst publicly known in the technical field can be used as the electrode catalyst.

In the solid polymer fuel cell of the present disclosure, the cathode catalyst layer includes the electrode catalyst for a fuel cell of the present disclosure in some embodiments. The cathode catalyst layer including the electrode catalyst for a fuel cell of the present disclosure allows suppressing dissolution of a noble metal, especially a noble metal in the cathode catalyst layer in which platinum and/or a platinum alloy possibly dissolve, thereby allowing the improvement of the durability of the fuel cell.

While not limited, the content of the electrode catalyst in each catalyst layer is ordinarily 5 weight% to 70 weight% relative to the total weight of the catalyst layer.

While not limited, an ionomer is used as the electrolyte in some embodiments. The ionomer is also referred to as a cation-exchange resin, and exists as a cluster formed of ionomer molecules. As the ionomer, an ionomer known in the technical field can be used. While not limited, for example, a fluoro resin-based electrolyte, such as a perfluorosulfonic acid resin material, a sulfonated plastic-based electrolyte, such as sulfonated polyether ketone, sulfonated polyethersulfone, sulfonated polyether ether sulfone, sulfonated polysulfone, sulfonated polysulfide, or sulfonated polyphenylene, a sulfoalkylated plastic-based electrolyte, such as sulfoalkylated polyether ether ketone, sulfoalkylated polyethersulfone, sulfoalkylated polyetherethersulfone, sulfoalkylated polysulfone, sulfoalkylated polysulfide, or sulfoalkylated polyphenylene, or a mixture of two or more of them can be used.

While the thickness of each catalyst layer is not limited, the thickness is ordinarily 1 µm to 20 µm to ensure the amount of the catalyst necessary for power generation and to keep the low proton resistance.

The solid polymer fuel cell of the present disclosure can be produced by a method known in the technical field.

The solid polymer fuel cell of the present disclosure can be prepared, for example, as follows.
(1) The electrode catalyst for a fuel cell of the present disclosure and an electrolyte, for example, an electrolyte containing a component the same as a component of a solid polymer electrolyte membrane are suspended in a solvent, for example, pure water, thus preparing a catalyst ink. At this time, for obtaining a uniform catalyst ink, ultrasonic dispersion or the like may be used.
(2) The catalyst ink obtained in (1) is applied and attached onto a peelable substrate, for example, Teflon (registered trademark) sheet, thus forming a catalyst layer precursor. For the applying and attaching, for example, a method using a gravity, a spray force, or an electrostatic force is employed.
(3) The catalyst layer precursor on the substrate is dried to prepare a catalyst layer on the substrate, and the catalyst layer is peeled off from the substrate, thus obtaining the catalyst layer.
   Here, while the catalyst layer is obtained by applying and attaching the catalyst ink onto the substrate and then drying and peeling off the catalyst ink in (2) to (3), the catalyst layer can be prepared also by directly applying and attaching the catalyst ink onto a surface of a solid polymer electrolyte membrane, and then drying the catalyst ink.
(4) The catalyst layer obtained in (3) is used as an air electrode, and for example, the catalyst layer obtained in (3) or a catalyst layer prepared using commercially available Pt/C catalyst instead of the electrode catalyst for a fuel cell of the present disclosure of (1) is used as a fuel electrode. The solid polymer electrolyte membrane is put on the center, the air electrode is disposed on one surface, and the fuel electrode is disposed on the other surface, thus obtaining a layer assembly. In some cases, a diffusion layer, for example, a conductive porous sheet, which is a sheet formed of a material having air permeability or liquid permeability, such as a carbon cloth and a carbon paper, may be disposed on outside of each of the air electrode and the fuel electrode.
(5) The layer assembly with the arrangement of (diffusion layer-) air electrode-solid polymer electrolyte membrane-fuel electrode (-diffusion layer) obtained in (4) is press-bonded by hot-pressing at ordinarily 100°C to 200°C, for example, at 140°C for ordinarily 5 seconds to 600 seconds, for example, 300 seconds, thus obtaining a membrane electrode assembly or a MEGA.
(6) Separators for distributing a gas are disposed on both surfaces of the membrane electrode assembly or the MEGA obtained in (5), thus obtaining a unit cell. A plurality of the unit cells are stacked, thereby obtaining a solid polymer fuel cell.

The solid polymer fuel cell of the present disclosure has the high activation and the high durability derived from the electrode catalyst for a fuel cell of the present disclosure at the same time.

### [Examples]

While the following describes some examples relating to the present disclosure, it is not intended to limit the present disclosure to the examples.

### 1. Sample Preparation

Electrode catalysts were prepared using carbon carriers having properties illustrated in a table below. The carbon carriers were prepared as follows.

The carbon carriers were each prepared by a method including a first step of preparing a mesoporous silica that serves as a mold, a second step of depositing carbon in mesopores of the mesoporous silica to produce a mesoporous silica/carbon composite, and a third step of removing the mesoporous silica from the composite. The method for producing the carbon carrier further included a fourth step of performing a heat treatment on the obtained carbon at a temperature higher than 1500°C after the third step.

In the first step, first, a mesoporous silica that served as a mold was produced. Details of the mesoporous silica and its producing method are as described in JP 2021-84852 A.

Subsequently, in the second step, carbon was deposited in mesopores of the mesoporous silica, thus producing a mesoporous silica/carbon composite. The deposition of the carbon in the mesopores was performed by specifically (a) introducing a carbon precursor in the mesopores, and (b) polymerizing and carbonizing the carbon precursor in the mesopores.

Here, the carbon precursor is a substance that can generate carbon through thermal decomposition. As the carbon precursor, specifically, (1) a polymer precursor that was a liquid at ordinary temperature and thermally polymerizable (for example, furfuryl alcohol, aniline, or the like), (2) a mixture of a carbohydrate aqueous solution and acid (for example, a mixture of monosaccharide, such as sucrose, xylose (wood sugar), or glucose (grape sugar), disaccharide, or polysaccharide and an acid, such as sulfuric acid, hydrochloric acid, nitric acid, or phosphoric acid), (3) a mixture of polymer precursors in two-component curing type (for example, phenol and formalin), or the like was used. Among them, since the polymer precursor can be impregnated in the mesopores without diluting with a solvent, a relatively large amount of carbon was able to be generated in the mesopores by relatively small number of times of impregnation. Additionally, there was an advantage that a polymerization initiator was not necessary, and handling was easy.

When the carbon precursor of liquid or solution is used, the larger adsorption amount of the liquid or the solution per use is better. The amount enough to fill the whole mesopores with the liquid or the solution was used. When a mixture of a carbohydrate aqueous solution and acid was used as the carbon precursor, the acid amount was a smallest amount that allows polymerizing an organic substance. Furthermore, when a mixture of polymer precursors in two-component curing type was used as the carbon precursor, for its ratio, an optimal ratio was selected corresponding to the types of the polymer precursors.

Subsequently, the polymerized carbon precursor was carbonized in the mesopores. The carbonization of the carbon precursor was performed by heating the mesoporous silica containing the carbon precursor to a predetermined temperature in a non-oxidizing atmosphere (for example, in an inert atmosphere or in vacuum). The heating temperature was specifically 500°C or more and 1200°C or less. The heating temperature of less than 500°C causes insufficient carbonization of the carbon precursor. On the other hand, the heating temperature of exceeding 1200°C causes a reaction of silica and carbon, and this is not desired. For the heating period, an optimal period was selected corresponding to the heating temperature.

The amount of carbon generated in the mesopores was set to be equal to or more than an amount enabling carbon particles to keep the shapes when the mesoporous silica was removed. Accordingly, when the amount of carbon generated by one filling, polymerizing, and carbonizing was relatively small, these steps were repeatedly performed multiple times. In this case, the conditions of the repeated respective steps were same or different for each. Additionally, when the respective steps of filling, polymerizing, and carbonizing were repeatedly performed multiple times, in the respective carbonizing steps, the carbonization treatment was performed at relatively low temperatures, and after the last carbonization treatment ended, the carbonization treatment was further performed again at a temperature higher than the relatively low temperatures. When the last carbonization treatment was performed at the temperature higher than the temperatures in the previous carbonization treatment, the carbon introduced in the pores in multiple times was easily integrated.

Subsequently, as the third step, the mesoporous silica as a mold was removed from the composite. Thus, carbon was obtained. The removing method of the mesoporous silica was specifically (1) a method in which the composite was heated in an alkaline aqueous solution of sodium hydroxide or the like, (2) a method in which the composite was etched with a hydrofluoric acid aqueous solution, or the like.

Subsequently, as the fourth step, the obtained carbon was heat-treated at a temperature higher than 1500°C. When a carbon source is carbonized in mesopores of mesoporous silica, the heat treatment temperature needs to be lowered for suppressing the reaction of silica and carbon. Therefore, the graphitization degree of carbon after the carbonization treatment is low. For obtaining the high graphitization degree, mesoporous carbon may be heat-treated at a high temperature after removing the mold. An excessively low heat treatment temperature causes insufficient graphitization. Accordingly, the heat treatment temperature was set to be more than 1500°C. Meanwhile, since a heat treatment temperature that was high more than necessary provided no difference in effect, and there was no practical benefit, the heat treatment temperature was set to be 2300°C or less.

**[Table 1]**

| Sample | Carbon Carrier | | |
|---|---|---|---|
| | Specific Surface Area (m²/g-Carbon) | Micropore Area (m²/g-Carbon) | Raman R-value |
| Comparative Example 1 | 110 | 28 | 0.8 |
| Comparative Example 2 | 196 | 40 | 1.0 |
| Comparative Example 3 | 262 | 41 | 1.1 |
| Comparative Example 4 | 337 | 42 | - |
| Comparative Example 5 | 396 | 33 | - |
| Comparative Example 6 | 541 | 74 | - |
| Comparative Example 7 | 466 | 65 | - |
| Comparative Example 8 | 751 | 117 | 2.0 |
| Comparative Example 9 | 846 | 169 | 2.0 |
| Comparative Example 10 | 1222 | 252 | 2.4 |
| Comparative Example 11 | 1049 | 216 | 2.2 |
| Comparative Example 12 | 1072 | 228 | 2.2 |
| Example 1 | 659 | 27 | 1.8 |
| Example 2 | 738 | 40 | 1.8 |

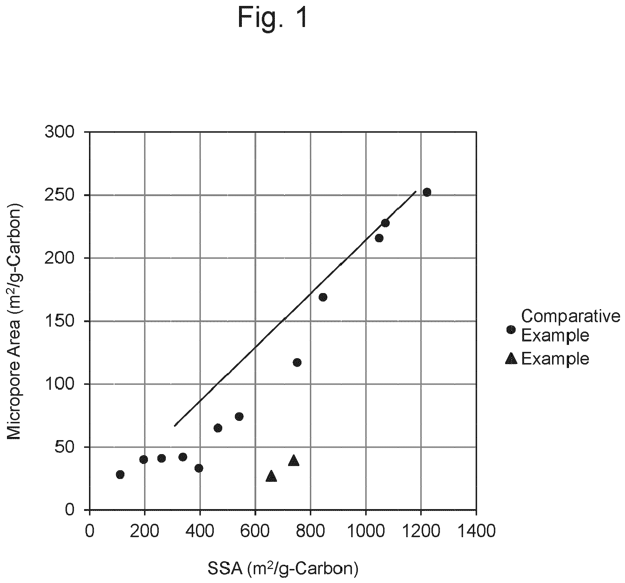

FIG. 1 illustrates a relation between a specific surface area (SSA) and a micropore area of carbon carriers used in Comparative Examples and Examples.

From FIG. 1, in the carbon carriers used in Comparative Examples, the specific surface area was proportionate to the micropore area. On the other hand, the specific surface area and the micropore area of the carbon carriers used in Examples were deviated from the proportional line of the specific surface area and the micropore area of the carbon carriers in Comparative Examples. It is considered that this indicates that the distribution of the micropores present on particle surfaces is different between the carbon carriers in Comparative Examples and the carbon carriers in Examples.

Supporting catalyst metal particles on the carbon carriers was performed as follows.

First, carbon carriers having physical properties of Table 1 were each dispersed in pure water. Subsequently, a dinitrodiamine platinum nitric acid solution (platinum: 1.0 g) as a platinum precursor was dropped to the carbon carrier dispersion liquids, and sufficiently absorbed to the carbon carriers. After sufficiently absorbing the platinum precursor to the carbon carriers, ethanol (3.2 g) as a reductant was added, and reduction loading was carried out. Next, the dispersion liquids after the reduction loading were filtered and washed, and the obtained powders were dried, thus obtaining catalysts supporting platinum. Subsequently, the amounts of oxygen on surfaces of the obtained catalysts supporting platinum were reduced to 4 weight% or less, and cobalt was supported to obtain a mole ratio of Pt:Co = 7:1 in a manner in which Co becomes more compared with a mole ratio between Pt and Co in an electrode catalyst as a completed product. Cobalt was supported by adding a solution containing cobalt in an ionic form. Next, the obtained powders were alloyed at 800°C under argon atmosphere. Finally, the obtained PtCo alloys supported on the carbon carriers were treated with nitric acid at ordinarily 70°C to 90°C, thereby sufficiently removing Co not contributing to the reaction.

### 2. MEA Evaluation

For carbon electrode catalysts supporting platinum cobalt alloy of Comparative Examples and Examples, the MEA evaluation was performed by a method below.

### (Relation Between Current Density and Cell Voltage)

First, the electrode catalysts produced in Examples and Comparative Examples were dispersed in an organic solvent, and the dispersion liquids were applied over Teflon (registered trademark) sheets, thus forming electrodes. Subsequently, the respective electrodes were bonded together via a polymer electrolyte membrane by hot pressing, and diffusion layers were disposed on both sides thereof, thus producing a unit cell for a solid polymer fuel cell.

IV measurement was performed with a cell temperature of 60°C and a relative humidity of both electrodes of 80% using a small unit cell evaluation device system (manufactured by TOYO Corporation).

In the IV measurement, the current was controlled in a range of from 0.01 A/cm² to 4.0 A/cm² as necessary. A voltage value at 0.2 A/cm² was defined as active.

### (Durability (Corrosion) Test)

The durability test was performed with an electric potential kept at 1.2 V under the condition of a cell temperature of 80°C and a bubbler temperature of 80°C (100% RH).

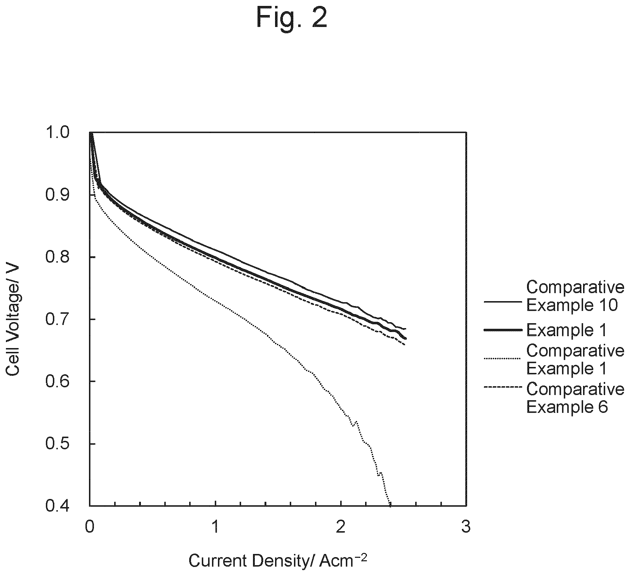

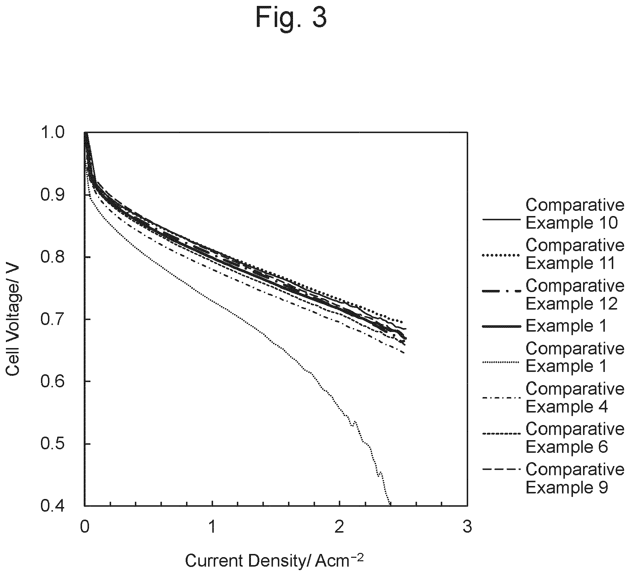

Table 2 illustrates the result of the corrosion test, and FIGS. 2 and 3 illustrate the relation between a current density and a cell voltage.

**[Table 2]**

| Sample | Carbon Carrier | | | Corrosion Test (1.2 V, 24 Hr, 80°C) | |
|---|---|---|---|---|---|
| | Specific Surface Area (m²/g-Carbon) | Micropore Area (m²/g-Carbon) | Raman R-value | Absolute Corrosion Weight% | Specific Corrosion Rate % |
| Comparative Example 1 | 110 | 28 | 0.8 | 5.3 | 64 |
| Comparative Example 2 | 196 | 40 | 1.0 | 7.2 | 49 |
| Comparative Example 3 | 262 | 41 | 1.1 | 9.7 | 49 |
| Comparative Example 4 | 337 | 42 | - | 9.1 | 37 |
| Comparative Example 5 | 396 | 33 | - | 9 | 30 |
| Comparative Example 6 | 541 | 74 | - | 16.6 | 41 |
| Comparative Example 7 | 466 | 65 | - | 17.8 | 51 |
| Comparative Example 8 | 751 | 117 | 2.0 | 24 | 42 |
| Comparative Example 9 | 846 | 169 | 2.0 | 32 | 50 |
| Comparative Example 10 | 1222 | 252 | 2.4 | 149 | 162 |
| Comparative Example 11 | 1049 | 216 | 2.2 | 64 | 81 |
| Comparative Example 12 | 1072 | 228 | 2.2 | 72 | 89 |
| Example 1 | 659 | 27 | 1.8 | 15 | 31 |
| Example 2 | 738 | 40 | 1.8 | 19 | 33 |

In Table 2, an absolute corrosion and a specific corrosion rate in the corrosion test were calculated as follows.

### (Absolute Corrosion)

Electrodes of selected catalysts or carbon were kept at 1.2 V (vs. reversible hydrogen electrode (RHE)) at 80°C in a 1M H₂SO₄ liquid electrolyte, and corrosion currents were monitored for 24 hours. An electric charge passed during the experiment was integrated with an assumption of four-electron process that converts carbon into a CO₂ gas, which was used for calculating removed carbon. The first one minute of the test was excluded because the electric charge passed in this period was caused by charging an electrochemical double layer, and therefore, was not caused by corrosion process. A mass of carbon lost during the 24 hours test was expressed as a percentage of the content of the initial carbon in the electrode.

### (Specific Corrosion Rate)

The specific corrosion rate was determined by expressing an amount of corroded carbon as a percentage of the number of surface carbon atoms. A largest electric charge necessary for removing one single molecular layer of carbon was determined with an assumption of carbon of 3.79 × 10¹⁹ atoms m⁻² and the four-electron process. The experimentally determined electric charge relating to the carbon corrosion was expressed as a percentage of the single molecular layer, thereby obtaining the specific corrosion rate.

The following is seen from Table 2 and FIGS. 2 and 3.

In comparative examples, the result was that the durability was high but the performance was low in Comparative Example 1, the performance was high but the durability was low in Comparative Examples 8 and 9, and the performance was the highest but the durability was significantly low in Comparative Examples 10 to 13, and it was found that providing both of the performance and the durability was difficult. On the other hand, in Examples, it was found that Examples 1 and 2 exhibit the high durability while exhibiting the high performance comparable to Comparative Examples 10 to 13. Accordingly, it was found that by performing the graphitization treatment at high temperature on the carbon carrier having the high specific surface area and the high micropore area for supporting platinum or a platinum alloy to adjust the specific surface area of the carbon carrier to 600 m²/g to 740 m²/g, adjust the micropore area of the carbon carrier to 15 m²/g to 40 m²/g, and further adjust the R-value (crystallinity) in the Raman spectroscopy analysis of the carbon carrier to 1.8 or less, the electrode catalyst providing the high performance while expressing the high durability, and the fuel cell including the electrode catalyst were able to be produced.

## Claims

1. An electrode catalyst for a fuel cell, comprising:
a carbon carrier; and
catalyst metal particles supported on the carbon carrier, the catalyst metal particles being formed of platinum (Pt) or a Pt alloy,
wherein the carbon carrier has:
(i) a BET specific surface area of 600 m²/g to 740 m²/g;
(ii) a micropore area of 15 m²/g to 40 m²/g; and
(iii) an R-value (= D/G) of 1.8 or less, and the R-value (= D/G) is an intensity ratio of a peak near 1340 cm⁻¹ (D-band) to a peak near 1580 cm⁻¹ (G-band) in a Raman spectroscopy analysis.

2. A solid polymer fuel cell comprising
a membrane electrode assembly that includes an anode catalyst layer, a cathode catalyst layer, and a solid polymer electrolyte membrane disposed between the anode catalyst layer and the cathode catalyst layer,
wherein an electrode catalyst of the anode catalyst layer and/or the cathode catalyst layer is the electrode catalyst for a fuel cell according to claim 1.
